(19) Europäisches Patentamt
European Patent Office
Office européen des brevets

(11) Veröffentlichungsnummer: **0 043 349**
**B1**

(12) # EUROPÄISCHE PATENTSCHRIFT

(45) Veröffentlichungstag der Patentschrift: **12.08.87**

(51) Int. Cl.[4]: **A 01 N 43/88** //
(A01N43/88, 43:40)

(21) Anmeldenummer: **81810261.8**

(22) Anmeldetag: **22.06.81**

(54) **Synergistisches Mittel und Verfahren zur selektiven Unkrautbekämpfung, insbesondere in Getreide und Sojabohnenkulturen.**

(30) Priorität: **27.06.80 CH 4970/80**

(43) Veröffentlichungstag der Anmeldung:
**06.01.82 Patentblatt 82/1**

(45) Bekanntmachung des Hinweises auf die Patenterteilung:
**12.08.87 Patentblatt 87/33**

(84) Benannte Vertragsstaaten:
**BE CH DE FR GB IT LI NL**

(56) Entgegenhaltungen:
**EP-A-0 004 414**

(73) Patentinhaber: **CIBA- GEIGY AG, Klybeckstrasse 141, CH- 4002 Basel (CH)**

(72) Erfinder: **Quadranti, Marco, Dr., Promenade 24, CH- 5200 Brugg (CH)**
Erfinder: **Maag, Kurt, Krebsenbachweg 18, CH- 4148 Pfeffingen (CH)**

(74) Vertreter: **Zumstein, Fritz jun., Dr., Dr. F. Zumstein sen. Dr. E. Assmann Dr. R. Koenigsberger Dipl.- Ing. F. Klingseisen Dr. F. Zumstein jun. Bräuhausstrasse 4, D-8000 München 2 (DE)**

EP 0 043 349 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein synergistisches Mittel, welches eine herbizide Wirkstoffkombination enthält, die sich hervorragend eignet zur selektiven Unkrautbekämpfung, besonders in Getreide und Sojabohnenkulturen. Die Erfindung betrifft auch ein Verfahren zur Bekämpfung von Unkräutern, insbesondere in Getreide und Sojabohnenkulturen unter Verwendung des neuen Mittels.

Die zur Zeit häufigsten und wichtigsten Unkräuter in Sojabohnenkulturen sind Spezies der Gattung Xanthium (Spitzkletten), Ipomoea (Winden) sowie Panicum (Hirsen), in Getreide Spezies der Gattung Sinapis (Senf), Chrysanthemum (Wucherblume) und gewisse Avena-Arten (Wildhafer).

Als hervorragende postemergente Selektivherbizide gegen monokotyle Unkräuter haben sich 4-(3',5'-Dichlorpyridyl-2'-oxy)-α-phenoxypropionsäurepropargylester der Formel I

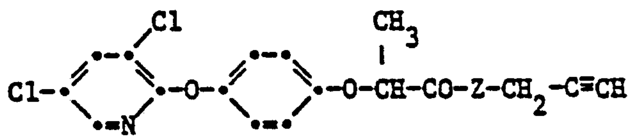

(I)

worin Z Sauerstoff oder Schwefel bedeutet, erwiesen.

Die Verbindungen der Formel I, nämlich 4-(3',5'-Dichlorpyridyl-2'-oxy)-α-phenoxypropionsäurepropargylester (Ia) und 4-(3',5'-Dichlorpyridyl-2'-oxy)-α-phenoxypropionthiolsäurepropargyl-ester (Ib), ihre Herstellung und Verwendung als Selektivherbizide werden in der Europäischen Patentpublikation Nr. 3114 beschrieben.

Dikotyle Unkräuter werden oft erfolgreich mit 3-Isopropyl-(IH)-benzo-2,1,3-thiadiazin-4-on-2,2-dioxid (Bentazon) der Formel II

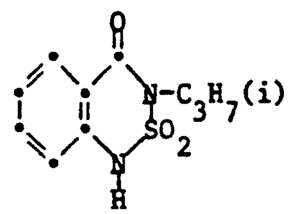

(II)

in postemergenter Anwendung bekämpft.

Bentazon und seine herbizide Wirksamkeit werden beispielsweise in Proc. 9th Br. Weed Control Conf. 1968, 1042 beschrieben.

Aus der europäischen Patentpublikation 4414 sind Mischungen von bestimmten Pyridyloxy-phenoxypropionsäure-Derivaten mit Bentazon bekannt, die eine komplementäre Wirkung entfalten. Derartige sich ergänzende Kombinationen von Herbiziden zur Vervollständigung eines gewünschten Wirkungsspektrums entspricht der in der landwirtschaftlichen Technik üblichen Praxis.

Es hat sich nun überraschenderweise gezeigt, dass eine mengenmässig variable Kombination der beiden Wirkstoffe Ia oder Ib mit dem Wirkstoff II eine synergistische Wirkung entfaltet, die die Mehrzahl aller wichtigen Getreide- und Sojaunkräuter zu bekämpfen vermag, ohne die Getreide- und Sojabohnenkulturen zu schädigen. Es werden die Hauptunkräuter der Sojabohnenkulturen, wie die Unterarten der Dikotyledonenarten Xanthium und Ipomoea sowie der Monokotyledonenarten Panicum (Digitaria) sanguinale und Panicum (Echinochloa) crus-galli selektiv in den aufgelaufenen Sojabohnenkulturen vernichtet, ebenso wie die Hauptunkräuter in Getreide, nämlich Unterarten der Dikotyledonen Chrysanthemum und Sinapis und einige Wildhaferarten.

Es ist überraschend, dass die Kombination eines Wirkstoffs der Formel I mit dem Wirkstoff der Formel II nicht nur eine prinzipiell zu erwartende additive Ergänzung des Wirkungsspektrums auf die üblichen mit Getreide und Sojabohnenkulturen vergesellschafteten Unkräuter hervorruft, sondern dass sie einen synergistischen Effekt erzielt, der die Wirkungsgrenzen beider Präparate unter zwei Aspekten erweitert.

Einmal werden die Aufwandmengen der Einzelverbindungen I und II bei gleichbleibend guter Wirkung deutlich gesenkt. Zum anderen erzielt die kombinierte Mischung auch dort noch einen hohen Grad der Umkraut-Bekämpfung, wo beide Einzelverbindungen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Getreide und Sojabohnenkulturen zur Folge, wie sie für unbeabsichtigte Wirkstoffüberdosierung notwendig und erwünscht ist.

Das erfindungsgemässe Mittel kann ausser in Sojabohnen- und Getreidekulturen wie Gerste, Roggen und insbesondere Weizen auch zur selektiven Unkrautbekämpfung in anderen mono- und dikotylen Kulturen mit ähnlicher Wirkstoffempfindlichkeit und ähnlichen Unkrautbestand eingesetzt werden, z. B. in Raps, Zierblumen und Reis.

Andere gut wirksame bekannte Dikotylenwirkstoffe ergeben im Gemisch mit den Wirkstoffen I keine

synergistischen Effekte. So zeigen andere ebenfalls untersuchte Mischungen des Monokotylenwirkstoffes der Formel Ia wohl eine gute herbizide Breitbandwirkung gegen Unkräuter und Ungräser, es kann jedoch zur Hauptsache nur additive und kaum synergistische Unkrautwirkung festgestellt werden.

Die erfindungsgemässe Wirkstoffkombination enthält einen Wirkstoff der Formel (I) und den der Formel (II) in allgemeinen in Verhältnis 1:1 bis 1:4, vorzugsweise 1:1 bis 1:2.

Die erfindungsgemässe Wirkstoffkombination zeigt eine ausgezeichnete Wirkung gegen Unkräuter, ohne aber Getreide oder Sojabohnenkulturen in üblichen Aufwandmengen von 0,2 bis 4 kg, vorzugsweise 0,5 bis 3 kg pro Hektar nennenswert zu beeinflussen.

Vorliegende Erfindung betrifft auch die Verwendung des erfindungsgemässen Mittels, also ein Verfahren zur selektiven Ungras- und Unkrautbekämpfung in Getreide- und Sojabohnenkulturen unter post-emergenter Anwedung des Mittels.

Das erfindungsgemässe Mittel mit der neuen Wirkstoffkombination enthält neben den genannten Wirkstoffen noch geeignete Träger- und/oder andere Zuschlagstoffe. Diese können fest oder flüssig sein und entsprechen den in der Formulierungstechnik üblichen Stoffen wie z. B. natürlichen oder regenerierten mineralischen Stoffen, Lösungs-, Dispergier-, Netz-, Haft-, Verdickungs-, Bindemittel oder Düngemitteln. Geeignete Anwendungsformen sind daher z. B. Emulsionskonzentrate, direkt versprühbare oder verdünnbare Lösungen, verdünnte Emulsionen, Spritzpulver, lösliche Pulvern, Stäubemittel, Granulate, auch Verkapselung in z. B. polymeren Stoffen. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirksdoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokusnussöl oder Sojaöl; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände werwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z. B. die Na- oder K-Salze der Öl- oder Stearinsäure, oder von natürlichen Fettsäuregemischen, die z. B. aus Kokosnuss- oder Talgöl gewonnen werden können, genannt. Ferner sind auch die Fettsäure-methyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehoren auch die Salze der Schwefelsäureester und Sulfonsäuren von Fettalkohol-Äthylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Fomaldehydkondensationsproduktes.

Ferner kommen auch entsprechende Phosphate wie z. B. Salze des Phosphorsäureesters eines p-Nonylphenol-(4-14)-Aethylenoxid-Adduktes in Frage.

Als nicht ionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 100 Propylenglykoläthergruppen enthaltenden Polyäthylenoxidaddukte an Polypropylenglykol,

Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl)äthylammonium-bromid.

Die in der Formulierungstechnik gebräuchlichen Tenside sind u.a. in folgenden Publikationen beschrieben:

"Mc Cutcheon's Detergents and Emulsifiers Annual" MC Publishing Corp., Ridgewood, New Jersey, 1979.

Sisley and Wood, "Encyclopedia of Surface Active Agents", Chemical Publishing Co., Inc. New York, 1964.

Der Wirkstoffgehalt in handelsfähigen Mitteln liegt zwischen 0,1 bis 95 Gewichtsprozent, vorzugsweise 1 bis 80 Gewichtsprozent.

Insbesondere setzen sich bevorzugte Formulierungen folgendermassen zusammen: (% = Gewichtsprozent)

| | |
|---|---|
| Lösungen | |
| Aktiver Wirkstoff: | 5 bis 95 %, vorzugsweise 10 bis 80 % |
| Lösungsmittel: | 95 bis 5 %, vorzugsweise 90 bis 0 % |
| oberflächenaktives Mittel: | 1 bis 30 %, vorzugsweise 2 bis 20 %. |
| Emulgeirbare Konzentrate | |
| Aktiver Wirkstoff: | 10 bis 50 %, bevorzugt 10 bis 40 % |
| oberflächenaktives Mittel: | 5 bis 30 %, bevorzugt 10 bis 20 % |
| flüssiges Trägermittel: | 20 bis 95 %, vorzugsweise 40 bis 80 %. |
| Stäube | |
| Aktiver Wirkstoff: | 0,5 bis 10 %, vorzugsweise 2 bis 8 % |
| festes Trägermittel: | 99,5 bis 90 %, vorzugsweise 98 bis 92 %. |
| Suspensions-Konzentrate | |
| Aktiver Wirkstoff: | 5 bis 75 %, vorzugsweise 10 bis 50 % |
| Wasser: | 94 bis 25 %, vorzugsweise 90 bis 30 % |
| oberflächenaktives Mittel: | 1 bis 40 %, vorzugsweise 2 bis 30 %. |
| Benetzbare Pulver | |
| Aktiver Wirkstoff: | 5 bis 90 %, vorzugsweise 10 bis 80 % und insbesondere 20 bis 60 % |
| oberflächenaktives Mittel: | 0,5 bis 20 %, vorzugsweise 1 bis 15 % |
| festes Trägermittel: | 5 bis 90 %, vorzugsweise 30 bis 70 %. |
| Granulate | |
| aktiver Wirkstoff: | 0,5 bis 30 %, vorzugsweise 3 bis 15 % |
| festes Trägermittel: | 99,5 bis 70 %, vorzugsweise 97 bis 85 %. |

Während als Handelsware eher konzentrierte Mittel bevorzugt werden, werwendet der Endverbraucher in der Regel verdünnte Mittel. Die Anwendungsformen können bis hinab zu 0,001 % an Wirkstoff verdünnt werden.

Den beschriebenen erfindungsgemässen Mitteln lassen sich andere biozide Wirkstoffe oder Mittel beimischen. So können die neuen Mittel ausser den genannten Verbindungen der allgemeinen Formeln I und der Formel II z. B. Insektizide, Fungizide, Bakterizide, Fungistatika, Bakteriostatika oder Nematizide zur Verbreiterung des Wirkungsspektrums enthalten.

Ein synergistischer Effekt liegt bei Herbiziden immer dann vor, wenn die herbizide Wirkung der Wirkstoffkombination I + II grösser ist als die Summe aus der Wirkung der einzeln applizierten Wirkstoffe.

Das zu erwartende Pflanzenwachstum E für eine gegebene Kombination zweier Herbizide kann (vgl. COLBY, S.R., "Calculating synergistic and antagnistic response of herbicide combinations". Weeds 15, Seiten 20 - 22, 1967) wie folgt berechnet werden:

$$E = \frac{X \cdot Y}{100}$$

Dabei bedeuten:

X = Prozent Wachstum (im Vergleich zu unbehandelten Pflanzen) bei Behandlung mit einem Herbizid I mit p kg Aufwandmenge pro Hektar,

Y = Prozent Wachstum bei Behandlung mit einem Herbizid II mit q kg Aufwandmenge pro Hektar,

E = Erwartetes Wachstum in Prozent zu den Kontrollpflanzen nach Behandlung mit Herbizidgemisch I + II bei einer Aufwandmenge von p + q kg Wirkstoffmenge pro Hektar.

Ist der tatsächlich beobachtete Wert niedriger als der zu erwartende Wert E, so liegt Synergismus vor.

Der synergistische Effekt der Kombination der beiden Wirkstoffe I und II wird in den folgenden Beispielen demonstriert.

**Beispiel I**:

Die Testpflanzen werden in Plastikcontainern, die 30 l sterilisierte Gartenerde enthalten, im Gewächshaus ausgesät. Nach dem Auflaufen werden die Pflanzen im 2- bis 3-Blattstadium mit einer wässerigen Dispersion der Wirkstoffkombination besprüht. Die Aufwandmenge an Dispersion beträgt 50 ml pro $m^2$. Nach 20 Tagen bei Temperaturen von 18 - 27°C einer relativen Luftfeuchtigkeit von 60 - 70 % und täglicher Bewässerung der Container erfolgt die Auswertung.

Der Schädigungsgrad der Pflanzen wird linear nach folgenden Masstab bewertet:

1: Pflanzen abgestorben

5: mittlere Wirkung

9: Normalzustand.

Für verschiedene Mischverhältnisse und Gesamtwirkstoffmengen werden folgende Ergebnisse erzielt:

**Tabelle I**:

Toleranz und Aktivität von 4-(3′,5′-Dichlorpyridyl-2′-oxy)-α-phenoxypropionsäurepropargylester (Verb. Ia) und Bentaxon (Verb. II) und deren Mischungen in Sojabohnenkulturen bei post-emergenter Anwendung:

| Bentazon kg AS/ha (Verbindung II) | | 1 | | | 0.5 | | | 0.25 | | 0 |
|---|---|---|---|---|---|---|---|---|---|---|
| Verbindung Ia kg AS/ha | 0 | 0.5 | 0.25 | 0 | 0.5 | 0.25 | 0 | 0.25 | 0.5 | 0.25 |
| Soja "Hark" | 9 | 9 | 9 | 9 | 9 | 9 | 9 | 9 | 9 | 9 |
| Panicum sanguinale | 9 | 1 | 1 | 9 | 1 | 1 | 9 | 1 | 1 | 1 |
| Panicum crus-galli | 9 | 1 | 1 | 9 | 1 | 1 | 9 | 1 | 1 | 1 |
| Xanthium canadensis | 1 | 1 | 1 | 1 | 1 | 1 | 2 | 1 | 9 | 9 |
| Ipomoea purpurea | 2 | 2 | 2 | 7 | 2 | 4 | 9 | 4 | 9 | 9 |

Werden die nach der Methode von Colby für additive Wirkung berechneten Werte mit den Resultaten aus Tabelle I verglichen, so erkennt man, dass die beobachteten Wachstumswerte bei Ipomoea purpurea kleiner sind, als die errechneten Wirkungen. Damit ist der synergistische Effekt der Mischung von 4-(3′,5′-Dichlorpyridyl-2′-oxy)-α-phenoxy-propionsäurepropargylester mit Bentazon bewiesen (vgl. Tabelle II).

**Tabelle II**:

Nach Methode Colby errechnete Werte zum Nachweis des Synergismus zwischen 4-(3′,5′-Dichlorpyridyl-2′-oxy)α-phenoxypropionsäurepropargylester (Verb. Ia) und Bentazon in Sojabohnenkulturen.

| Bentazon kg AS/ha (Verbindung II) | 1 | | | | 0.5 | | | | 0.25 | |
|---|---|---|---|---|---|---|---|---|---|---|
| Verbindung Ia kg AS/ha | 0.5 | | 0.25 | | 0.5 | | 0.25 | | 0.25 | |
| | gemessener Wert | erwarteter Wert | gemessener Wert | erwarteter Wert | gemessener Wert | erwarteter Wert | gemessener Wert | erwarteter Wert | gemessener Wert | erwarteter Wert |
| Soja "Hark" | 100 | 100 | 100 | 100 | 100 | 100 | 100 | 100 | 100 | 100 |
| Panicum sanguinale | 1 | 1 | 1 | 1 | 1 | 1 | 1 | 1 | 1 | 1 |
| Panicum crus-galli | 1 | 1 | 1 | 1 | 1 | 1 | 1 | 1 | 1 | 1 |
| Xanthium canadensis | 1 | 1 | 1 | 1 | 1 | 1 | 1 | 1 | 1 | 1 |
| Ipomoea purpurea | 12 | 12 | 12 | 12 | 12 | 75 | 37 | 75 | 37 | 100 |

**Beispiel 1a:**

Die Testpflanzen werden in Plastikcontainern, die 30 l sterilisierte Gartenerde enthalten, im Gewächshaus ausgesät. Nach den Auflaufen werden die Pflanzen im 2- bis 3-Blattstadium mit einer wässerigen Dispersion der Wirkstoffkombination besprüht. Die Aufwandmenge an Dispersion beträgt 50 ml pro $m^2$. Nach 15 Tagen bei Temperaturen von 10 - 20° C, einer relativen Luftfeuchtigkeit von 60 - 70 % und täglicher Bewässerung der Container erfolgt die Auswertung. Der Bewertungsmasstab ist der gleiche wie in Beispiel 1.

Für die verschiedenen Mischungsverhältnisse und Gesamtwirkstoffmengen werden folgende Ergebnisse erzielt:

**Tabelle III:**

Toleranz und Aktivität von 4-(3',5'-Dichlorpyridyl-2'-oxy)-α-phenoxypropionsäurepropargylester (Verb. Ia) und Bentazon (Verb. II) und deren Mischungen in Weizen bei post-emergenter Anwendung:

| Bentazon kg AS/ha (Verbindung II) | 1 | | | 0,5 | | | 0 | |
|---|---|---|---|---|---|---|---|---|
| Verbindung Ia kg AS/ha | 0 | 0,5 | 0,25 | 0 | 0,5 | 0,25 | 0,5 | 0,25 |
| Weizen "Colibri" | 9 | 6 | 9 | 9 | 6 | 9 | 6 | 7 |
| Avena fatua | 9 | 2 | 2 | 9 | 2 | 2 | 2 | 2 |
| Chrysanthemum segetum | 2 | 1 | 1 | 4 | 2 | 2 | 9 | 9 |

**Tabelle IV:**

Toleranz und Aktivität von 4-(3',5'-Dichlorpyridyl-2'-oxy)-α-phenoxy propionthiolsäurepropargylester (Verb. Ib) und Bentzazon (Verb. II) und deren Mischungen in Weizen bei post-emergenter Awendung:

| Bentazon (Verbindung II) kg AS/ha | | 1 | | | 0,5 | | 0 | |
|---|---|---|---|---|---|---|---|---|
| Verbindung Ib kg AS/ha | 0 | 0,5 | 0,25 | 0 | 0,5 | 0,25 | 0,5 | 0,25 |
| Weizen "Colibri" | 9 | 7 | 7 | 9 | 8 | 8 | 7 | 7 |
| Avena fatua | 9 | 2 | 2 | 9 | 2 | 2 | 2 | 2 |
| Chrysanthemum segetum | 2 | 1 | 1 | 4 | 1 | 2 | 9 | 9 |

werden die nach der Methode von Colby für additive Wirkung berechneten Werte mit den Resultaten aus den Tabellen III und IV verglichen, so erkennt man, dass die beobachteten Wachstumswerte bei Chrysanthemum segetum kleiner sind, als die errechneten Wirkungen. Damit ist der synergistische Effekt der Mischungen von 4-(3',5'-Dichlorpyridyl-2'-oxy)-α-phenoxypropionsäure (Verb. Ia) oder 4-(3',5'-Dichlorpyridyl-2'-oxy)-α-phenoxypropionthiolsäurepropargylester (Verb. Ib) mit Bentazon bewiesen (vgl. Tabellen V und VI).

**Tabelle V**:

Nach Methode Colby errechnete Werte zum Nachweis des Synergismus zwischen 4-(3',5'-Dichlorpyridyl-2'-oxy)-α-phenoxypropionsäurepropargylester (Verb. Ia) und Bentazon in Weizen:

| Bentazon kg AS/ha | 1,0 | | | | 0,5 | | | |
|---|---|---|---|---|---|---|---|---|
| Verbindung Ia kg AS/ha | 0,5 | | 0,25 | | 0,5 | | 0,25 | |
| | gemessener Wert | erwarteter Wert | gemessener Wert | erwarteter Wert | gemessener Wert | erwarteter Wert | gemessener Wert | erwartetet Wert |
| Weizen "Colibri" | 62 | 62 | 100 | 75 | 62 | 62 | 100 | 75 |
| Avena fatua | 12 | 12 | 12 | 12 | 12 | 12 | 12 | 12 |
| Chrysanthemum segetum | 1 | 12 | 1 | 12 | 12 | 37 | 12 | 37 |

**Tabelle VI**:

Nach Methode Colby errechnete Werte zum Nachweis des Synergismus zwischen 4-(3',5'-Dichlorpyridyl-2'-oxy)-α-phenoxy-propionthiolsäurepropargylester (Verb. Ib) und Bentazon in Weizen:

| Bentazon kg AS/ha | 1,0 | | | | 0,5 | | | |
|---|---|---|---|---|---|---|---|---|
| Verbindung Ib kg AS/ha | 0,5 | | 0,25 | | 0,5 | | 0,25 | |
| | gemessener Wert | erwarteter Wert | gemessener Wert | erwarteter Wert | gemessener Wert | erwarteter Wert | gemessener Wert | erwarteter Wert |
| Weizen "Colibri" | 75 | 75 | 75 | 75 | 87 | 75 | 87 | 75 |
| Avena fatua | 12 | 12 | 12 | 12 | 12 | 12 | 12 | 12 |
| Chrysanthemum segetum | 1 | 12 | 1 | 12 | 1 | 37 | 12 | 37 |

**Beispiel 2:**

Die Kombination der Wirkstoffe I und II kann wie folgt formuliert werden (Teile bedeuten Gewichtsteile):

**Stäubemittel:**

Zur Herstellung eines 3-%igen Stäubemittels werden die folgenden Stoffe verwendet:
1 Teil Wirkstoff Ia,
2 Teile Wirkstoff II,
97 Teile Talkum.
Die Wirkstoffe werden mit den Trägerstoffen vermischt und vermahlen.

**Beispiel 3:**

**Granulat**

Zur Herstellung eines 5 %-igen Granulates werden die folgenden Stoffe verwendet:
2 Teile Wirkstoff Ib,
3 Teile Wirkstoff II,
0,25 Teile epoxidertes Pflanzenöl,
0,25 Teile Cetylpolyäthylenglykoläther mit 8 Mol Aethylenoxid,
3,50 Teile Polyäthylenglykol (mittl. Molekulargwicht 400 g/Mol),
91 Teile Kaolin (Korngrösse 0,3 bis 0,8 mm).
ie Aktivsubstanz wird mit epoxidiertem Pflanzenöl vermischt und in 6 Teilen Aceton gelöst, hierauf werden Polyäthylenglykol und Cetylpolyäthylenglykoläther zugesetzt. Die so erhaltene Lösung wird auf Kaolin aufgesprüht und anschliessend im Vakuum eingedampft.

**Beispiel 4:**

**Spritzpulver**

Zur Herstellung eines a) 70 %-igen und b) 25 %-igen Spritzpulvers werden folgende Bestandteile verwendet:

a)
20 Teile Wirkstoff Ib,
50 Teile Wirkstoff II,
5 Teile Natriumdibutylnaphthylsulfonat,
3 Teile Napthalinsulfonsäuren-Phenolsulfonsäuren-Formaldehyd-Kondensat 3:1:1,
10 Teile Kaolin,
12 Teile Kreide;

b)
10 Teile Wirkstoff Ia,
15 Teile Wirkstoff II,
5 Teile Oleylmethyltaurid-Natrium-Salz,
2,5 Teile Naphthalinsulfonsäuren-Formaldehyd-Kondensat
0,5 Teile Carboxymethylcellulose,
5 Teile neutrales Kalium-Aluminium-Silikat,
62 Teile Kaolin;

Die Wirkstoffe werden mit den Hilfsmitteln auf Kaolin bzw. Kreide aufgezogen und anschliessend vermischt und vermahlen. Man erhält Spritzpulver von vorzüglicher Benetzbarkeit und Schwebefähigkeit. Aus solchen Spritzpulvern können durch Verdünnen mit Wasser Suspensionen jeder gewünschten Wirkstoffkonzentration erhalten werden. Derartige Suspensionen lassen sich zur Bekämpfung von Unkräutern und Ungräsern in Getreide und Sojabohnenkulturen in Nachauflaufverfahren verwenden.

**Beispiel 5: Paste**

Zur Herstellung einer 45 %igen Paste werden folgende Stoffe verwendet:
15 Teile Wirkstoff Ia,
30 Teile Wirkstoff II,
5 Teile Natriumaluminiumsilikat,,
14 Teile Cetylpolyäthylenglykoläther mit 8 Mol Äthylenoxid,
1 Teil Oleylpolyäthylenglykoläther mit 5 Mol Aethylenoxid,
2 Teile Spindelöl,
23 Teile Wasser
10 Teile Polyäthylenglykol (mittl. Molekulargewicht 400 g/Mol).

Die Wirkstoffe werden mit den Zuschlagstoffen in geeigneten Geräten homogenisiert und vermahlen. Man erhält eine Paste, aus der sich durch Verdünnen mit Wasser Suspensionen jeder gewünschten Konzentration herstellen lassen.

**Beispiel 6: Emulsionskonzentrat**

Zur Herstellung eines 25 %igen Emulsionskonzentrates werden
25 Teile Wirkstoffgemisch (1:3) aus Verbindungen Ia und II,
5 Teile Mischung von Nonylphenolpolyoxyäthylen und Calciumdodecylbenzol-sulfonat,
35 Teile 3,5,5-Trimethyl-2-cyclohexan-1-on,
35 Teile Dimethylformamid
miteinander vermischt. Dieses Konzentrat kann mit Wasser zu Emulsionen auf geeignete Konzentration verdünnt werden.

**Patentansprüche**

1. Mittel zur selektiven Unkrautbekämpfung auf Basis einer Mischung aus 3-Isopropyl-(1H)-benzo-2,1,3-thiadiazin-4-on-2,2-dioxid (II) und aus einer Verbindung vom Typ der 4-Pyridyloxy-α-phenoxypropionsäureester (I) neben Träger- und/oder anderen Zuschlagstoffen, dadurch gekennzeichnet, dass es als Verbindung des Typs (I) 4-(3',5'-Dichlorpyridyl-2'-oxy)-α-phenoxy-propionsäurepropargylester (Ia) oder 4-(3',5'-Dichlorpyridyl-2'-oxy)-α-phenoxypropionthiolsäurepropargylester (Ib) in einer eine synergistische Herbizidwirkung erzeugenden Menge enthält.

2. Mittel gemäss Patentanspruch 1, dadurch gekennzeichnet, dass im genannten Mittel die Komponente (II) gegenüber der Komponente (I) in etwa gleichem Gewichtsverhältnis oder im Überschuss vorhanden ist.

3. Mittel gemäss Patentanspruch 2, dadurch gekenmzeichnet, dass das Gewichtsverhältnis zwischen Komponente (I) und Komponente (II) 1:1 bis 1:4, vorzugsweise 1:1 bis 1:2 beträgt.

4. Verfahren zur selektiven Unkrautbekämpfung in Getreide und Sojabohnenkulturen, dadurch gekennzeihnet, dass man verunkrautete Getreide- und Sojabohnenkulturen post-emergent mit einer wirksamen Menge eines Mittels gemäss Patentanspruch 1 behandelt.

5. Verfahren gemäss Patentanspruch 4, dadurch gekennzeichnet, dass man Getreide und Sojabohnenkulturen, welche als Unkräuter Hirsen der Gattung Panicum, Wildhafer der Gattung Avena, Windengewächse der Gattung Ipomonea, Kreuzblütler der Gattung Sinapis und/oder Kompositen der Gattungen Xanthium und Chrysanthemum und verwandten Arten enthalten, mit dem genannten Mittel behandelt.

6. Verfahren gemäss Ansprüchen 4 und 5, dadurch gekennzeichnet, dass man die Getreide oder Sojabohnenkulturen kurz nach dem Auflaufen mit dem genannten Mittel in Aufwandmengen behandelt, die 0,2 bis 4 kg, vorzugsweise 0,5 bis 3 kg Totalwirkstoffe pro Hektar entsprechen.

7. Verwendung einer wirksamen Menge eines Mittels gemäss Patentanspruch 1 zur postemergenten selektiven Unkrautbekämpfung in Getreide- und Sojabohnenkulturen.

**Claims**

1. A composition for selectively controlling weeds comprising a mixture of 3-isopropyl-(1H)-benzo-2,1,3-thiadiazin-4-one 2,2-di-oxide (II) and a compound selected from 4-pyridyloxy-α-phenoxy-propionic acid esters (I), together with carriers and/or other adjuvants, which composition contains as component (I) 4-(3',5'-dichloropyridyl-2'-oxy)-α-phenoxypropionic acid propargyl ester (Ia) or 4-(3',5'-dichloropyridyl-2'-oxy)-α-phenoxythiopropionic acid propargyl ester (Ib) in an amount producing a synergistic herbicidal action.

2. A composition according to claim 1, which contains component (II) in approximately equal ratio to, or in excess of, component (I).

3. A composition according to claim 2, in which the ratio of component (I) to component (II) is 1:1 to 1:4, preferably 1:1 to 1:2.

4. A method of selectively controlling weeds in cereals and soybeans, which method comprises treating weed-infested crops of cereals and soybeans postemergence with a herbicidally effective amount of a composition according to claim 1.

5. A method according to claim 4, which comprises treating crops of cereals and soybeans in which the weeds to be controlled are grasses of the genus Panicum, wild oats of the genus Avena, convolvuli of the genus Ipomoea, cruciferae of the genus Sinapis, and/or composites of the genera Xanthium and Chrysanthemum and related species.

6. A method according to either of claims 4 or 5, which comprises treating the crops of cereals or soybeans, shortly after emergence, with the composition at rates of application corresponding to 0.2 to 4 kg, preferably 0.5 to 3 kg, of total active ingredient per hectare.

7. Use of an effective amount of a composition according to claim 1 for selectively controlling weeds in crops of cereals and soybeans postemergence.

**Revendications**

1. Produit pour lutter sélectivement contre les mauvaises herbes, à base d'un mélange de 2,2-dioxyde de la 3-isopropyl-(1H)-benzo-2,1,3-thiadiazine-4-one (II) et d'un composé du type des esters 4-pyridyloxy-α-phénoxypropioniques (I) avec des véhicules et/ou d'autres additifs, caractérisé en ce qu'il contient en tant que composé du type I le 4-(3',5'-dichloropyridyl-2'-oxy)-α-phénoxy-propionate de propargyle (Ia) ou le 4-(3',5'-dichloropyridyl-2'-oxy)-α-phénoxypropionothiolate de propargyle (Ib) en quantité conduisant à une activité herbicide synergétique.

2. Produit selon la revendicatiom 1, caractérisé en ce qu'il contient le composant II en un poids à peu près égal à celui du composant I ou en excés par rapport au composant I.

3. Produit selon la revendication 2, caractérisé en ce que les proportions relatives en poids entre le composant I et le composant II sont de 1:1 à 1:4, de préférence de 1:1 à 1:2.

4. Procédé pour lutter sélectivement contre les mauvaises herbes dans les cultures de céréales et de soja, caractérisé en ce que l'on traite les cultures de céréales et de soja infestées par les mauvaises herbes, en post-levée, par une quantité efficace d'un produit selon la revendication 1.

5. Procédé selon la revendication 4, caractérisé en ce que l'on traite par le produit en question des cultures de céréales et de soja contenant en tant que mauvaises herbes des millets du genre Panicum, de la folle avoine du genre Avena, des liserons du genre Ipomonea, des crucifères du genre Sinapis et/ou des composées des genres Xanthium et Chrysanthemum et des espèces apparentées.

6. Procédé selon les revendications 4 et 5, caractérisé en ce que l'on traite par le produit en question des cultures de céréales ou de soja, peu après la levée, par application de quantités de 0,2 à 4 kg, de préférence de 0,5 à 3 kg de substances actives totales par ha.

7. Utilisation d'une quantité efficace d'un produit selon la revendication 1 pour la lutte sélective contre les mauvaises herbes en post-levée dans les cultures de céréales et de soja.